Europäisches Patentamt

(19) **European Patent Office**

Office européen des brevets

(11) Publication number: **0 023 064**
**B1**

(12) **EUROPEAN PATENT SPECIFICATION**

(45) Date of publication of patent specification: **17.08.83**

(51) Int. Cl.³: **A 01 C 15/08, A 01 C 7/16**

(21) Application number: **80200672.6**

(22) Date of filing: **09.07.80**

(54) **Hopper and feed wheel assembly for a fertilizer spreader.**

(30) Priority: **23.07.79 US 59806**

(43) Date of publication of application:
**28.01.81 Bulletin 81/4**

(45) Publication of the grant of the patent:
**17.08.83 Bulletin 83/33**

(84) Designated Contracting States:
**BE DE FR GB IT NL**

(56) References cited:
**FR - A - 956 099**
**US - A - 2 143 801**
**US - A - 2 176 528**
**US - A - 2 630 945**
**US - A - 2 814 421**

(73) Proprietor: **SHELL INTERNATIONALE RESEARCH MAATSCHAPPIJ B.V.**
**Carel van Bylandtlaan 30**
**NL-2596 HR Den Haag (NL)**

(72) Inventor: **Viramontes, Jose Alba**
**Star Route Box 18A**
**Mesilla Park, New Mexico 88047 (US)**

(74) Representative: **Puister, Antonius Tonnis, Mr. et al,**
**P.O. Box 302**
**NL-2501 CH The Hague (NL)**

Courier Press, Leamington Spa, England.

Hopper and feed wheel assembly for a fertilizer spreader

The invention relates to a hopper and feed wheel assembly for a spreader for distributing granular material comprising a hopper having a bottom which is equipped with a discharge opening which is closable and adjustable in size by means of a movable plate, a feed wheel rotatably arranged within the hopper adjacent to said bottom and extending over the width of the hopper, and means for driving the feed wheel, wherein the outer surface of the feed wheel is provided with an agitating rod.

Such a hopper and feed wheel assembly for use in a spreader is known from US patent specification 2,630,945. The feed wheel of the known hopper and feed wheel assembly is provided with straight agitating rods which extend along the outer surface of the feed wheel in a direction parallel to the central axis of the feed wheel, and which are spaced apart from the said outer surface. When, during normal operation of the spreader the feed wheel is rotated, the agitating rods will transport volumes of material towards the discharge opening.

It has been observed that during distribution of the granular material a cake of this material is formed on the bottom of the hopper, which cake is further compacted with time by the action of the agitating rods crushing the granular material. The compacted medium causes excessive wear of the agitating rods.

The object of the invention is to provide a hopper and feed wheel assembly for a spreader whereby during operation of the spreader the formation of such a cake on the bottom of the hopper is prevented.

For this purpose the hopper and feed wheel assembly according to the invention is characterized in that the agitating rod is bent to form a plurality of lengths extending in axial direction over substantially the whole length of the feed wheel, the adjacent axial rod lengths being connected by rod lengths which extend in a circumferential direction, in that the axial rod lengths are bent to form a number of protuberances which are raised to a certain distance from the outer surface of the feed wheel, the combined number and positioning of the protuberances on the rod lengths being such that all the points along a line parallel to the shaft at said certain distance from the outer surface are contacted during rotation of said feed wheel, and in that the feed wheel is positioned in the hopper so that the protuberances closely approach the bottom of the hopper.

The advantage of the hopper and feed wheel assembly according to the invention is that it further promotes agitation of the granular material and that it minimizes the compaction of such material when transported to the discharge opening by the agitating rods.

An attractive embodiment of the invention is characterized in that a gap exists between the protuberances and the bottom of the hopper, wherein the height of the gap is in the range of from 3 to 4 mm (1/8—5/32 inch).

Another suitable embodiment of the invention is characterized in that the feed wheel is a tube which is concentrically arranged on a drive shaft which extends through the side walls of the hopper.

A further possible embodiment of the invention is characterized in that the means for driving the feed wheel comprise a belt or a chain drive connected to an end part of the drive shaft.

The hopper which is employed in the hopper and feed wheel assembly of the present invention is an open-topped, box like or cylindrical storage bin having a concave or tapered i.e., "V-shaped" bottom, which is equipped with an adjustable opening for discharge of granular material for example fertilizers, pesticides or seeds. To avoid possible contamination of the contained granular material and to ensure operation safety, the top of the hopper is equipped with a hinged lid so that the top of the hopper can be closed during use. The discharge opening of the hopper may be of any suitable configuration—i.e., rectangular, oval, triangular etc.—and is preferably in the shape of a slit which is tapered at one end and disposed longitudinally along the bottom of the hopper. To regulate the size of the discharge opening and the rate at which granular material is released, the hopper is suitably provided with a movable plate which is positioned immediately below the discharge opening such that it can slide over and cover all or a portion of the opening in accordance with calibrated settings. The size of the hopper employed in the assembly according to the invention may vary in accordance with conventional practice, depending on the size of the spreader and the number of hoppers positioned on the spreader. The hoppers are sized to hold in the range of from 20 to 70 kg (50—150 pounds) of granular material when filled to capacity. The sides and base of the hopper are suitably fabricated out of a rigid plastic material such as polyethylene or polypropylene or out of sheet metal. In a conventional spreader construction, from 4 to 12 hoppers are positioned along a horizontal bar or frame in accordance with the spacing required in the field (75 to 100 cm (30—40 inch) spacing). The movable plate employed to adjust or to close the bottom discharge opening of the hopper is most suitably constructed out of metal (steel or other iron alloy) or plastic coated metal.

The invention will now be described by way of example in more detail with reference to the drawings, wherein:

Figure 1 is a side view of a spreader for distributing granular material which is provided with the hopper and feed wheel assembly according to the invention;

Figure 2 is a cross-section of the hopper looking down on the feed wheel and hopper base from line 2—2 of Figure 1;

Figure 3 is a side view of the feed wheel according to the invention; and

Figure 4 is a planar view of the outer surface of the feed wheel according to the invention.

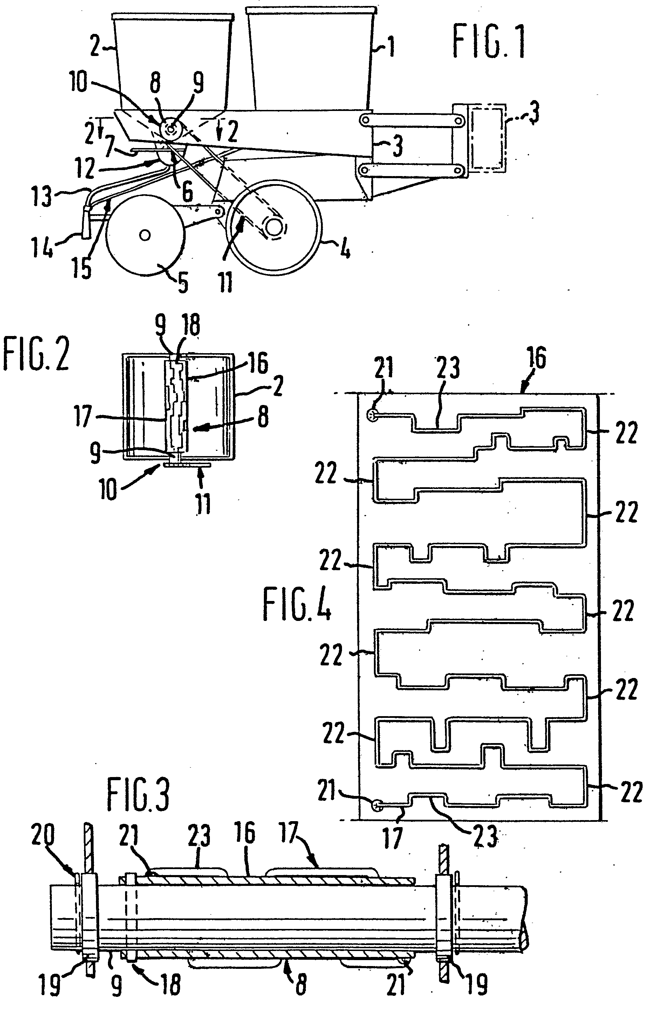

Referring to Figure 1, showing a spreader for distributing granular material which spreader includes a front mounted hopper 1 and a rear mounted hopper 2 which are arranged on a main frame 3, which is carried by two wheels 4. A closing wheel 5 is attached to the main frame for covering the furrow in which seeds are placed by the planter mechanism (not shown). The hopper 2, has a concave bottom which is equipped with a slit shaped discharge opening 6 for the release of a granular material. The size of the discharge opening 6, and the rate of granular material release is controlled by means of a movable plate 7, which slides over and closes the discharge opening 6 in accordance with calibrated settings. The hopper 2 is further equipped with a feed wheel 8. The feed wheel 8, which is described in greater detail below, traverses the width of the hopper bottom in a longitudinal orientation immediately above the discharge opening 6 and is further attached to a drive shaft 9 which extends through the sides of the hopper 2. To cause rotation of the feed wheel 8 when the spreader is pulled through the field, the drive shaft 9 is equipped with a chain gear 10, which is connected to the axle of the wheel 4 by means of a chain 11. In the embodiment shown in the Figure 1, granular material is released at a controlled rate from the discharge opening 6 into a receiving spout 12, which is connected at its bottom to a distribution tube 13, which tube leads to a dispenser 14 for distributing the granular material on the field. The dispenser 14 is attached to the main frame 3 by means of a brace 15.

As shown in Figure 2, the feed wheel 8 is centered in the bottom of the hopper 2, at a point immediately above the discharge opening (not shown). Referring now to Figures 2 and 3, it can be seen that the feed wheel 8 is a tube 16 which extends over the width of the hopper 2 and which is concentrically arranged on the drive shaft 9. The feed wheel 8 is further provided with an agitating rod 17. The tube 16 is connected to the drive shaft 9 by means of a pressure clip 18. The drive shaft 9 is held in position by means of bushings 19 which are fitted in the walls of the hopper 2. The tolerance between the bushing 19 and the drive shaft 9 is chosen such that the drive shaft 9 is free to rotate and that escaping of granular material through the opening between the bushing 19 and the drive shaft 9 is prevented. Axial movement of the drive shaft 9 relative to the hopper 2 is prevented by means of cotter pins 20.

The agitating rod 17 which surrounds the portion of the tube 16 inside the hopper 2 is attached to the outer surface of the tube 16 by means of welds 21 at each rod end (see Figure 3 and Figure 4). From the points of attachment, the agitating rod 17 is bent to form a plurality of rod lengths extending in axial direction over about the whole length of the feed wheel 8, the adjacent axial rod lengths being connected by rod lengths 22 which extend in a circumferential direction. In addition thereto each axial rod length is further bent in an outward direction from the outer surface of the tube to form a series of protuberances 23, raised to a certain distance from the outer surface of the feed wheel 8, which feed wheel 8 is positioned in the hopper 2 so that the protuberances 23 closely approach the bottom of the hopper 2.

It will be appreciated that the invention is not restricted to a chain gear 10 which is connected to the axle of a drive wheel 4 by means of the chain 11. In an alternative embodiment of the invention the drive shaft 9 is provided with a pulley which is connected to the axle of a drive wheel 4 by means of a belt.

The tube 16 and the agitating rod 17 are suitably fabricated from any conventional metal which will resist wear and breakage under field use conditions. Iron or iron alloys may be employed as material of construction for both the tube 16 and the agitating rod 17, with mild steel being preferred and stainless steel being most preferred. Suitably, the outer diameter of the tube 16 is in the range of from 10 to 40 mm 1/2—1-1/2 inch, with 20 to 25 mm 3/4—1 inch being preferred. The diameter of the agitating rod 17 is in the range of from 3 to 6 mm 1/8—1/4 inch, preferably 4 mm 5/32 inch. In a suitable configuration of the feed wheel 8, the protuberances 23 of the agitating rod 17 extend out from the outer surface of the tube 16 so that an approximate 3 to 6 mm 1/8—1/4 inch gap exists between the tube 16 and the protuberances 23. Further for effective operation. It is desirable to space the axial rod lengths by means of circumferential rod lengths 22 so that the distance between adjacent axial rod lengths is no more than about 10 mm (1/2 inch). Suitably, the ends of the agitating rod 17 are welded to the same or to opposite ends of the tube 16.

The feed wheel 8 is suitably positioned in the lower portion of the hopper 2 so that a 3 to 4 mm 7/8—5/32 inch gap exists between the protuberances 23 of the axial rod lengths and the base of the hopper 2.

**Claims**

1. A hopper and feed wheel assembly for a spreader for distributing granular material comprising a hopper (2) having a bottom which is equipped with a discharge opening (6) which is closable and adjustable in size by means of a movable plate (7), a feed wheel (8) rotatably arranged within the hopper (2) adjacent to said bottom and extending over the width of the hopper (2), and means for driving the feed wheel (8), wherein the outer surface of the feed wheel (8) is provided with an agitating rod (17), characterized in that the agitating rod (17) is bent to form a plurality of lengths extending in axial direction over substantially the whole length of the feed wheel (8), the adjacent axial rod lengths being connected by rod lengths (22) which extend in circumferential direction, in that the axial rod lengths are bent to form a number of protuberances (23) which are raised to a certain distance from the outer surface of the feed wheel (8), the combined number and positioning of the protuberances on the rod lengths being such that all the points along a line parallel to the shaft at said certain distance from the outer surface are contacted during rotation of said feed wheel (8), and in that the feed wheel (8) is positioned in the hopper (2) so that the protuberances (23) closely approach the bottom of the hopper (2).

2. The hopper and feed wheel assembly according to claim 1, characterized in that a gap exists between the protuberances (23) and the bottom of the hopper (2), wherein the height of the gap is in the range of from 3 to 4 mm (1/8—5/32 inch).

3. The hopper and feed wheel assembly according to any one of the claims 1—2, characterized in that the feed wheel (8) is a tube (16) which is concentrically arranged on a drive shaft (9) which extends through the side walls of the hopper (2).

4. The hopper and feed wheel assembly according to claim 3, characterized in that the means for driving the feed wheel (8) comprise a belt or a chain drive connected to an end part of the drive shaft (9).

**Revendications**

1. Un ensemble de réservoir et de cylindre de distribution pour un épandeur afin de distribuer une matière granulaire comprenant un réservoir (2) ayant un fond équipé d'une ouverture de déchargement (6) qui est fermable et réglable en dimensions au moyen d'une plaque mobile (7), un cylindre de distribution (8) disposé de manière à tourner dans le réservoir (2) près de son fond et s'étendant sur la largeur du réservoir (2), et des moyens pour entraîner le cylindre de distribution, la surface extérieure du cylindre de distribution (8) étant pourvue d'une tige d'agitation (17), caractérisé en ce que la tige d'agitation (17) est coudée de manière à former une multiplicité de portions s'étendant en direction axiale sur la quasi-totalité de la longueur du cylindre de distribution (8), les portions de tige axiales adjacentes étant reliées par des portions de tige (22) qui s'étendent dans une direction circonférentielle, en ce que les portions axiales de tige sont coudées de manière à former un certain nombre de protubérances (23) qui sont élevées à une certaine distance de la surface extérieure du cylindre de distribution (8), le nombre et les positions des protubérances sur les portions de tige étant combinés de manière que tous les points le long d'une ligne parallèle à l'arbre à ladite certaine distance de la surface extérieure subissent un contact durant la rotation du cylindre de distribution (8), et en ce que le cylindre de distribution (8) est placé dans le réservoir (2) de manière que les protubérances (23) s'approchent très près du fond du réservoir (2).

2. Un ensemble de réservoir et de cylindre de distribution selon la revendication 1, caractérisé en ce qu'il existe un espace libre entre les protubérances (23) et le fond du réservoir (2), la hauteur de l'espace libre étant comprise entre 3 et 4 mm.

3. Un ensemble de réservoir et de cylindre de distribution selon l'une des revendications 1 et 2, caractérisé en ce que le cylindre de distribution (8) est un tube (16) qui est disposé coaxialement sur un arbre d'entraînement (9) qui s'étend à travers les parois latérales du réservoir (2).

4. Un ensemble de réservoir et de cylindre d'alimentation selon la revendication 3, caractérisé en ce que les moyens pour entraîner le cylindre d'alimentation (8) comprennent une transmission à courroie ou à chaîne reliée à une partie terminale de l'arbre d'entraînement (9).

**Patentansprüche**

1. Behälter- und Speiserad-Baugruppe für eine Streuvorrichtung zum Ausbringen körnigen Streugutes, mit einem Behälter (2) mit einem Boden, der eine Abgabeöffnung (6) aufweist, die mittels einer verstellbaren Platte (7) verschließbar und größenveränderbar ist, einem Speiserad (8), das im Behälter (2) in der Nähe des genannten Bodens drehbar gelagert ist und sich über die Breite des Behälters (2) erstreckt, und mit Mitteln zum Antreiben des Speiserades (8), wobei das Speiserad (8) auf seiner Außenfläche eine Rührstange (17) trägt, dadurch gekennzeichnet, daß die Rührstange (17) so gebogen ist, daß sich über ungefähr die gesamte Länge des Speiserades (8) mehrere Abschnitte axial erstrecken, wobei einander benachbarte axiale Stangenabschnitte durch in Umfangsrichtung sich erstreckende Stangenabschnitte (22) miteinander verbunden sind, die axialen Stangenabschnitte so gebogen sind, daß mehrere Vorsprünge (23) gebildet sind, die auf einen bestimmten Abstand über der Außenfläche des Speiserades (8) angehoben sind, wobei die Anzahl und die Anordnung der Vorsprünge in den Stangenabschnitten so miteinander kombiniert sind, daß alle Stellen, die auf einer zur Welle im genannten bestimmten Abstand von der Außenfläche parallelen Linie liegen, bei einer Drehbewegung des Speiserades (8) zur Berührung kommen, und daß das Speiserad (8) im Behälter (2) so angeordnet ist, daß sich die Vorsprünge (23) dem Boden des Behälters (2) bis auf einen sehr kleinen Abstand nähern.

2. Behälter- und Speiserad-Baugruppe nach Anspruch 1, dadurch gekennzeichnet, daß die zwischen den Vorsprüngen (23) und dem Boden des Behälters (2) ein Zwischenraum besteht, dessen Höhe zwischen 3 und 4 mm (1/8 bis 5/32 engl. Zoll) beträgt.

3. Behälter- und Speiserad-Baugruppe nach Anspruch 1 oder 2, dadurch gekennzeichnet, daß das Speiserad (8) ein Rohr (16) ist, das auf einer Antriebswelle (9) konzentrisch angeordnet ist, welche die Seitenwände des Behälters (2) durchdringt.

4. Behälter- und Speiserad-Baugruppe nach Anspruch 3, dadurch gekennzeichnet, daß die Mittel zum Antreiben des Speiserades (8) einen Riemen- oder Kettentrieb aufweisen, der mit einem Endabschnitt der Antriebswelle (9) verbunden ist.

0 023 064

FIG.1

FIG.2

FIG.4

FIG.3

1